# EUROPEAN PATENT APPLICATION

(11) **EP 3 324 304 A1**
(43) Date of publication of application: **23.05.2018**
(21) Application number: 16823751.9
(22) Date of filing: 12.06.2016
(51) Int. Cl.: G06F 17/30

(54) **DATA PROCESSING METHOD, DEVICE AND SYSTEM**

(30) Priority: 15.07.2015 CN 201510417386
(71) Applicant: ZTE Corporation, Shenzhen, Guangdong 518057 (CN)
(72) Inventor: LIU, Lixia, Shenzhen Guangdong 518057 (CN); WEN, Tao, Shenzhen Guangdong 518057 (CN); WANG, Zhikun, Shenzhen Guangdong 518057 (CN); WANG, Dong, Shenzhen Guangdong 518057 (CN); LIU, Haijun, Shenzhen Guangdong 518057 (CN)
(74) Representative: Studio Torta S.p.A.
(86) International application number: PCT/CN2016/085487
(87) International publication number: WO 2017/008604

(57) **Abstract**

A data processing method, comprising: acquiring a data sample to be collected, and preprocessing the data sample to be collected, so as to obtain a data collecting mode, a data processing model and a collection task of each node in a cluster (S10); according to the data collecting mode, the data processing model and the collection task of each node in the cluster, controlling each node in the cluster to perform data acquisition and data processing, so as to acquire processed data (S20); and uniformly fusing the processed data to acquire uniformly fused data (S30). A data processing device and a data processing system.

## Description

### TECHNICAL FIELD

Embodiments of the present disclosure relate to, but not limited to, the computer information processing filed, and more particularly to a data processing method, device and system.

### BACKGROUND

Data now invades every sector and business function today and has become an important production factor. The era of big data has come. The explosive growth of big data tests the capabilities of modern enterprises in data processing and analysis in terms of large capacity, diversity and high growth rates, and at the same time gives enterprises lot of opportunities to have more access to richer, deeper and more accurate insights into markets behaviors. At present, the most important fact is that processing and analysis of big data is needed and the processing and analysis can give a lot of intelligent, in-depth and valuable information. Compared with traditional data, big data presents 4V+1O features, which are represented as Volume (the big data involves in a tremendous amount of data), Variety (the big data involves in a variety of data), Velocity (the big data needs a tremendous amount of data to be processed very quickly), Value (the value density is low), and Online (the data is online). There are two types of conventional big data processing tools in related arts: a traditional ETL (Extract-Transform-Load) tool and a big data collection tool based on Hadoop Distributed File System.

Users are increasingly demanding on the efficiency and integration (fusion) of big data processing. However, the conventional big data processing tools in the related arts are deficient in processing of multi-sourced, heterogeneous, and massive data. The data processing has high manual participation, is not fine and efficient, different data is not fused uniformly, and the integration degree is not high, thereby resulting in low usability and practicability of the obtained data.

### SUMMARY

The following is a summary of the subject matters which will be described in detail below.

The summary is not intended to limit the scope as defined by claims.

Embodiments of the present disclosure can solve the technical problem of low efficiency and fusion degree in big data processing.

An embodiment of the present disclosure provides a data processing method. The method includes the following steps.

Samples of data to be collected are acquired, and the samples of the data to be collected are pre-processed to obtain a data collection mode, a data processing model and a collection task of each node in a cluster.

According to the data collection mode, the data processing model and the collection task of each node in the cluster, each node in the cluster is controlled to perform data collection and data processing to obtain processed data.

The processed data is uniformly fused to obtain uniformly fused data.

According to an exemplary embodiment, the acquiring samples of data to be collected, and pre-processing the samples of data to be collected to obtain a data collection mode, a data processing model and a collection task of each node in a cluster includes:
controlling each node in the cluster to read the data to be collected and acquiring the samples of the data to be collected and a load condition of each node in the cluster;
assessing the samples of the data to be collected to obtain a quality assessment report which includes a data type, data coding, a data redundancy, a data sparseness, and a data transmission speed; and
according to the quality assessment report and load conditions of all nodes in the cluster, adapting the data collection mode and the data processing model, and assigning the collection task for each node in the cluster.

According to an exemplary embodiment, according to the data collection mode, the data processing model and the collection task of each node in the cluster, controlling each node in the cluster to perform data collection and data processing to obtain processed data, includes: controlling each node in the cluster to perform data collection in the collection mode according to the collection task corresponding to the node; and
controlling each node in the cluster to process collected data according to the data processing model to obtain processed data.

According to an exemplary embodiment, uniformly fusing the processed data to obtain uniformly fused data includes at least one of:
according to a preset data regularization model, performing data regularization on the processed data to obtain the uniformly fused data;
according to a preset data integration model, performing data integration on the processed data to obtain the uniformly fused data; and
according to a preset data modeling model, performing data modeling on the processed data to obtain the uniformly fused data.

According to an exemplary embodiment, after uniformly fusing the processed data to obtain uniformly fused data, the method further includes:
storing the uniformly fused data by categories.

According to an exemplary embodiment, before acquiring samples of data to be collected, and pre-processing the samples of the data to be collected to obtain a data collection mode, a data processing model and a collection task of each node in a cluster, the method further includes:
configuring a data collection interface;
the acquiring samples of data to be collected, and pre-processing the samples of data to be collected, includes:
   acquiring the samples of the data to be collected by the data collection interface and
   pre-processing the samples of the data to be collected;
   the controlling each node in the cluster to perform data collection and data processing, includes:
      controlling each node in the cluster to perform data collection by the data collection interface, and controlling each node in the cluster to perform data process on the collected data.

According to an exemplary embodiment, the configuring the data collection interface includes:
acquiring a configuration parameter of the data collection interface;
performing a connection test on the data collection interface according to the configuration parameter;
if the connection test is successful, distributing a configuration file of the data collection interface which includes the configuration parameter to other nodes in the cluster, configuring each node in the cluster, and controlling each node in the cluster to connect to the data collection interface; and
if the connection test is not successful, performing the step of acquiring a configuration parameter of the data collection interface.

Another embodiment of the present disclosure provides a data processing device. The data processing device includes an adaption module, a data processing module, and a uniform fusion module.

The adaption module is configured to acquire samples of data to be collected, and pre-process the samples of the data to be collected to obtain a data collection mode, a data processing model and a collection task of each node in a cluster.

The data processing module is configured to, according to the data collection mode, the data processing model and the collection task of each node in the cluster, control each node in the cluster to perform data collection and data processing to obtain processed data.

The uniform fusion module is configured to uniformly fuse the processed data to obtain uniformly fused data.

According to an exemplary embodiment, the adaption module includes:
a sample collection unit configured to control each node in the cluster to read data to be collected and acquire the samples of the data to be collected and a load condition of each node in the cluster;
a data assessment unit configured to assess the samples of the data to be collected to obtain a quality assessment report which includes a data type, data coding, a data redundancy, a data sparseness, and a data transmission speed; and
an adaption unit configured to, according to the quality assessment report and load conditions of all nodes in the cluster, adapt the data collection mode and the data processing model, and assigning the collection task for each node in the cluster.

According to an exemplary embodiment, the data processing module includes:
a data collection unit configured to control each node in the cluster to perform data collection in the collection mode according to the collection task corresponding to the node; and
a data processing unit configured to control each node in the cluster to process collected data according to the data processing model to obtain processed data.

According to an exemplary embodiment, the uniform fusion module includes a data acquisition unit and one or more of a data regularization unit, a data integration unit and a data modeling unit.

The data regularization unit is configured to, according to a preset data regularization model, perform data regularization on the processed data.

The data integration unit is configured to, according to a preset data integration model, perform data integration on the processed data.

The data modeling unit is configured to, according to a preset data modeling model, perform data modeling on the processed data.

The data acquisition unit is configured to acquire the uniformly fused data.

According to an exemplary embodiment, the data processing device further includes a storage module configured to store the uniformly fused data by categories.

According to an exemplary embodiment, the data processing device further includes an interface configuration module configured to configure a data collection interface;
the adaption module is configured to acquire the samples of the data to be collected by the data collection interface and pre-process the samples of the data to be collected;
the data processing module is configured to control each node in the cluster to perform data collection by the data collection interface, and control each node in the cluster to perform data process on the collected data.

According to an exemplary embodiment, the interface configuration module includes:
a parameter acquisition unit configured to acquire a configuration parameter of the data collection interface;
a connection test unit configured to perform a connection test on the data collection interface according to the configuration parameter; and
a file distribution unit configured to, if the connection test is successful, distribute a configuration file of the data collection interface which includes the configuration parameter to other nodes in the cluster, configure each node in the cluster, and control each node in the cluster to connect to the data collection interface;
the parameter acquisition unit is further configured to, if the connection test is not successful, acquire a configuration parameter of the data collection interface.

Another embodiment of the present disclosure further provides a data processing system. The data processing system includes an adaption processor, a data processor, and a data uniform fusion processor.

The adaption processor is configured to acquire samples of data to be collected, and pre-process the samples of the data to be collected to obtain a data collection mode, a data processing model and a collection task of each node in a cluster.

The data processor is configured to, according to the data collection mode, the data processing model and the collection task of each node in the cluster, control each node in the cluster to perform data collection and data processing to obtain processed data.

The data uniform fusion processor is configured to uniformly fuse the processed data to obtain uniformly fused data.

According to an exemplary embodiment, the data processing system further includes:
a data collection interface adaptor configured to configure a data collection interface;
a data storage configured to store the uniformly fused data by categories; and
a system manager which includes:
   a data managing module configured to manage a configuration file of the data collection interface, a connection test result of the data collection interface, data samples to be collected, a quality assessment report and load conditions of all nodes in the cluster;
   a resource managing module configured to manage samples of the data to be collected, data collection, data processing, uniform fusion and storage of data, and resource consumption condition of the cluster, and control load balancing of all nodes in the cluster;
   a model managing module configured to manage a data collection interface configuration template, a data assessment template, a data collection template, a data processing model, a data regularization model, a data integration model and a data modeling model; and
   a procedure monitoring module configured to monitor procedures of configuration of the data collection interface, reading of samples of data to be collected, data assessment, data processing, uniform fusion and storage of data, and record and process completion status, a middle error and an abnormal during the procedures of the configuration of the data collection interface, reading of samples of data to be collected, data assessment, data processing, uniform fusion and storage of data.

In embodiments of the present disclosure, heterogeneous data is analyzed according to samples, a data collection mode and a data processing model are automatically adapted, data is collected and processed, loads of all nodes in a cluster are adjusted to arrive at a load balance, and various heterogeneous data which has inherent relevance with each other is uniformly fused. The present disclosure can effectively solve the problem of low efficiency and fusion degree in big data processing in related arts, can improve the efficiency in data processing and fusion degree of data, and consequently increase usability and practicability of the obtained data and ensure data quality for big data analysis and value exploration. Other aspects of the present disclosure can become apparent after reading and understanding the detailed description below and the drawings.

### BRIEF DESCRIPTION OF THE DRAWINGS

Fig. 1 is a flowchart illustratively showing a data processing method according to an embodiment of the present disclosure.
Fig. 2 is a flowchart illustratively showing a data processing method according to an embodiment of the present disclosure.
Fig. 3 is a flowchart illustratively showing a data processing method according to an embodiment of the present disclosure.
Fig. 4 is a flowchart illustratively showing a data processing method according to an embodiment of the present disclosure.
Fig. 5 is a flowchart illustratively showing a data processing method according to an embodiment of the present disclosure.
Fig. 6 is a flowchart illustratively showing a data processing method according to an embodiment of the present disclosure.
Fig. 7 is a flowchart illustratively showing a data processing method according to an embodiment of the present disclosure.
Fig. 8 is a block diagram illustratively showing a data processing device according to an embodiment of the present disclosure.
Fig. 9 is a block diagram illustratively showing a data processing device according to an embodiment of the present disclosure.
Fig. 10 is a block diagram illustratively showing a data processing device according to an embodiment of the present disclosure.
Fig. 11 is a block diagram illustratively showing a data processing device according to an embodiment of the present disclosure.
Fig. 12 is a block diagram illustratively showing a data processing device according to an embodiment of the present disclosure.
Fig. 13 is a block diagram illustratively showing a data processing device according to an embodiment of the present disclosure.
Fig. 14 is a block diagram illustratively showing a data processing device according to an embodiment of the present disclosure.
Fig. 15 is a block diagram illustratively showing a data processing system according to an embodiment of the present disclosure.
Fig. 16 is a block diagram illustratively showing a data processing system according to an embodiment of the present disclosure.

### DETAILED DESCRIPTION

The main solution provided by embodiments of the present disclosures is as follows. Samples of data to be collected are acquired through a data collection interface, and the samples of the data to be collected are pre-processed to obtain a data collection mode, a data processing model and a collection task of each node in a cluster. According to the data collection mode, the data processing model and the collection task of each node in the cluster, each node in the cluster is controlled to perform data collection and data processing to obtain processed data. The processed data is uniformly fused to obtain uniformly fused data.

In related arts, data processing needs high manual participation, is not fine and efficient, and data which is scattered but has inherent relevance with each other is not uniformly fused and the fusion degree is not high. Thus, the resulted data has low usability and practicability.

Using the solution provided by embodiments of the present disclosure, the data collection mode and the processing type can be automatically adapted, the multi-sourced, heterogeneous and massive data is uniformly fused. Thus, the present disclosure can improve the efficiency in data processing and fusion degree of data, and consequently increase usability and practicability of the obtained data and ensure data quality for big data processing and value exploration.

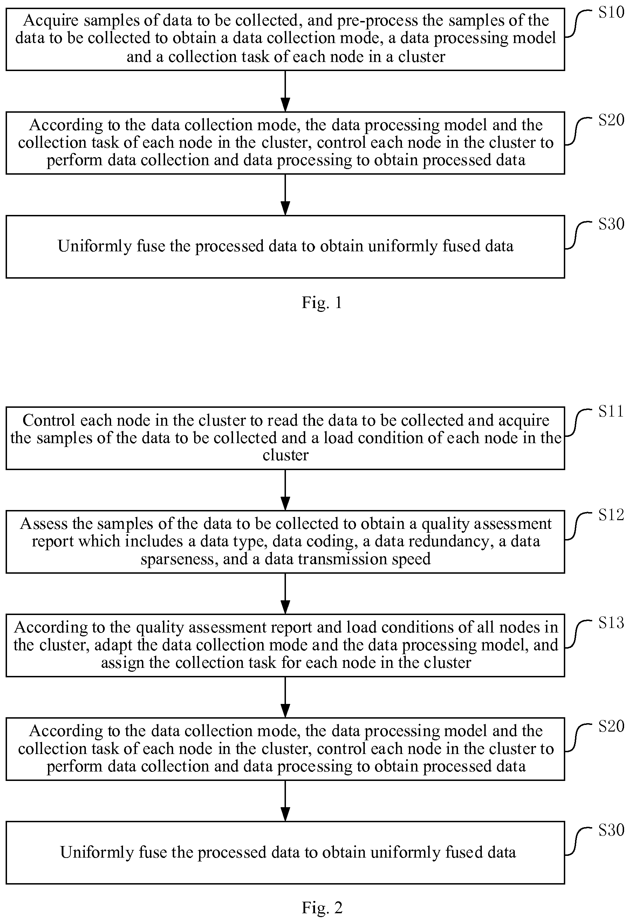

Fig. 1 is a flowchart illustratively showing a data processing method according to an embodiment of the present disclosure. The data processing method includes the following steps.

In step S10, samples of data to be collected are acquired, and the samples of the data to be collected are pre-processed to obtain a data collection mode, a data processing model and a collection task of each node in a cluster.

Each node in a cluster is controlled to collect the data to be collected to obtain samples of data to be collected and load conditions of all nodes in the cluster. The samples of the data to be collected include a preset number of data to be collected. The load conditions of all nodes in the cluster include a data collection rate, performance, response status and load capacity of each node during the data collection so that resource and load condition of each node during the collection of the samples of the data to be collected can be known.

The samples of the data to be collected are pre-processed, the basic quality attributes of the samples of the data to be collected are detected and determined to obtain a quality assessment report.

According to the quality assessment report and the load conditions of all nodes in the cluster, a data collection mode is determined, a data processing model is adapted, and a collection task is assigned for each node in the cluster.

Depending on data types, different data collection modes can be adapted (suitably configured). Different data collection modes may include full, incremental, non-real-time, real-time modes and so on. For example, for dynamic streaming data, an incremental real-time collection mode is adapted; for structured data, a full non-real-time collection mode is adapted; for semi-structured data and non-structured data, a full non-real-time collection mode is adapted. Alternatively, other collection modes can be used, and the data collection modes can be set flexibly according on actual needs.

Depending on data types, different data processing models can be adapted. Data of different types, for example, streaming data, bulk data, structured data, semi-structured data and non-structured data, can be processed in different manners. Data processing models can be pre-configured for processing of streaming data, non-structured picture data, non-structured audio and video data, non-structured text data, semi-structured data, and structured data, and the models can be directly adapted and called to support model reuse and revisions.

The data processing models may include the follows. For dynamic streaming data, the model may include sequential processing steps of data extraction, data filtering, data association, data conversion and data classification. For structured data, the model may include sequential processing steps of data extraction and abnormal cleaning. For semi-structured data and non-structured data, the model may include sequential processing steps of data extraction, data parsing, abnormal cleaning, data segmentation, and feature extraction. It should be noted that the data processing models can be directly adapted, and the data processing models can also be finely adjusted, and the data processing steps and models can be flexibly set according to actual processing needs.

Each node in the cluster is assigned with a collection task. This realizes a dynamic adjustment of load of each node in the cluster, can remove or reduce load imbalance among all nodes in the system, and can thereby improve efficiency in data collection and processing.

In step S20, according to the data collection mode, the data processing model and the collection task of each node in the cluster, each node in the cluster is controlled to perform data collection and data processing to obtain processed data.

Each node in the cluster is controlled to perform data collection in the adapted collection mode according to the collection task which is assigned to the node (i.e., each node executes the collection task which is assigned to this node). For example, for dynamic streaming data, data collection is performed in an incremental real-time collection mode; for structured data, data collection is performed in a full non-real-time collection mode; for semi-structured data and non-structured data, data collection is performed in a full non-real-time collection mode to obtain the collected data.

Each node in the cluster is controlled to process data which is collected by this node in the adapted data processing model. For example, according to a data processing model for dynamic streaming data, processing steps of data extraction, data filtering, data association, data conversion and data classification are sequentially performed. According to a processing model for structured data, processing steps of data extraction and abnormal cleaning are sequentially performed. According to a data processing model for semi-structured data and non-structured data, processing steps of data extraction, data parsing, abnormal cleaning, data segmentation, and feature extraction are sequentially performed. In this way, different heterogeneous data can be collected and processed depending on properties of data itself to obtain processed data.

In step S30, the processed data is uniformly fused to obtain uniformly fused data.

Data regularization, data integration or data modeling is performed on the data after collection and processing. By data regularization and data integration, the data which has inherent relevance with each other has uniform format and is effectively integrated. The data modeling provides functions like data model design, and data index constructing. In this way, data which is scattered but has inherent relevance with each other can be associated to obtain uniformly fused data.

In the embodiment, heterogeneous data is analyzed according to samples, a data collection mode and a data processing model are automatically adapted, data is collected and processed, loads of all nodes in a cluster are adjusted to arrive at a load balance, and various heterogeneous data which has inherent relevance with each other is uniformly fused. The embodiment can effectively solve the problem of low efficiency and fusion degree in big data processing in related arts, can improve the efficiency in data processing and fusion degree of data, and consequently increase usability and practicability of the obtained data and ensure data quality for big data processing and value exploration.

Fig. 2 is a flowchart illustratively showing a data processing method according to an embodiment of the present disclosure. On the basis of the embodiment described with reference to Fig. 1, step S10 may include the following steps.

In step S11, each node in the cluster is controlled to read data to be collected and the samples of data to be collected and a load condition of each node in the cluster are acquired.

Each node in a cluster is controlled to collect a preset number of data to be collected to obtain samples of the data to be collected and load conditions of all nodes in the cluster during the data collection. The samples of the data to be collected include a preset number of data to be collected. The load conditions of all nodes in the cluster include a data collection rate, performance, response status and load capacity of each node during the data collection.

In step S12, the samples of data to be collected are assessed to obtain a quality assessment report which includes a data type, data coding, a data redundancy, a data sparseness, and a data transmission speed.

Each node in the cluster is controlled to assess data quality of the samples of the data collected by the node. The data assessment may include a data type, data coding, a data redundancy, a data sparseness, and a data transmission speed of the samples of the data collected by each node in the cluster. The data quality reports of nodes in the cluster are gathered and collated to form a final quality assessment report. The final quality assessment report is a final test and verdict of the basic quality attribute of the samples of the data to be collected, including a final data type, data coding, a data redundancy, a data sparseness, and a data transmission speed of the final samples of data to be collected.

The samples of the data to be collected which are collected by each node are acquired and gathered, and the basic data quality attribute of the gathered samples of the data to be collected is determined and judged. The basic data quality attribute may include a data type, data coding, a data redundancy, a data sparseness, and a data transmission speed. Then, a quality assessment report can be obtained.

In step S 13, according to the quality assessment report and load conditions of all nodes in the cluster, the data collection mode and the data processing model are adapted, and the collection task is assigned for each node in the cluster.

According to the data type and the data transmission speed in the quality assessment report, a data collection mode is adapted. According to the data coding, the data redundancy and the data sparseness in the quality assessment report, a data processing model is adapted. According to the data transmission speed in the quality assessment report and load conditions of all nodes in the cluster, each node in the cluster is assigned with a collection task.

In the embodiment, samples of the data to be collected are acquired. By pre-processing of the samples of the data to be collected, the quality assessment report and the load conditions of all nodes in the cluster are obtained. According to the quality assessment report and the load conditions of all nodes in the cluster, the data collection mode and the data processing model are automatically adapted. Thus, the embodiment can more effectively and reasonably perform data collection and data processing for various heterogeneous data (including various dynamic streaming data, static structured data, semi-structured data and non-structured data) according to data properties of data itself. Collection tasks can be reasonably assigned so that each node in the cluster can perform data collection according to a corresponding collection task, thereby realizing load balancing among all nodes in the cluster and improving the cluster processing capability.

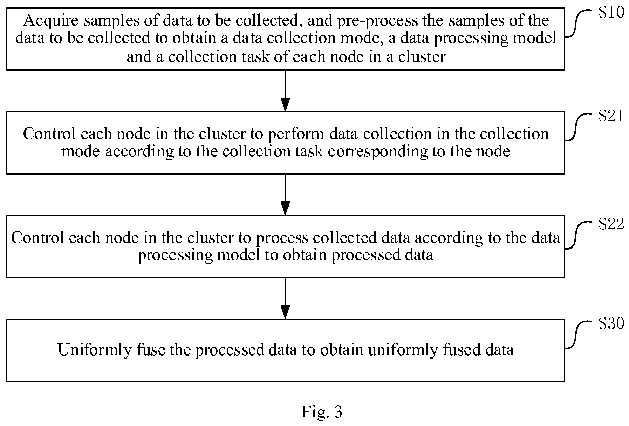

Fig. 3 is a flowchart illustratively showing a data processing method according to an embodiment. On the basis of the embodiment described with reference to Fig. 1, step S20 may include the following steps.

In step S21, each node in the cluster is controlled to perform data collection in the collection mode according to the collection task corresponding to the node.

Each node in the cluster is controlled to perform data collection in the adapted collection mode according to the corresponding collection task which is assigned to the node. For example, for dynamic streaming data, data collection is performed in an incremental real-time collection mode and the collected data is buffered. For structured data, data collection is performed in a full non-real-time collection mode. For semi-structured data and non-structured data, data collection is performed in a full non-real-time collection mode. The non-structured data may be further classified into text data, audio data, video data, picture data, and so on, and different non-structured data can have different collection manner. For example, for text data, text data collection is performed; for audio data, audio data collection is performed; for video data, video data collection is performed; for picture data, picture data collection is performed. In this way, collected data can be obtained.

In step S22, each node in the cluster is controlled to process collected data according to the data processing model to obtain processed data.

Each node in the cluster is controlled to perform data processing on the data which is collected by the node according to the adapted data processing model. For example, according to a data processing model for dynamic streaming data, processing steps of data extraction, data filtering, data association, data conversion and data classification are sequentially performed. According to a processing model for structured data, processing steps of data extraction and abnormal cleaning are sequentially performed. According to a data processing model for semi-structured data and non-structured data, processing steps of data extraction, data parsing, abnormal cleaning, data segmentation, and feature extraction are sequentially performed. After data processing is finished, processed data is obtained. The non-structured data may be further classified into text data, audio data, video data, picture data, and so on, and different non-structured data can have different processing manner. For example, according to a data processing model, processing steps like text data collection, parsing of text structure and coding, repetition and abnormal cleaning, Chinese word segmentation and feature extraction are performed on text data.

Depending on collection mode, middle data and metadata generated during the data processing and result data after the data processing can be stored or buffered by suitable storage medium. For example, result data which is generated by performing data extraction, data parsing and abnormal cleaning on the original data to be collected, result data which is generated by performing data segmentation of the original data to be collected, and result data which is generated by performing feature extraction on the original data to be collected can be stored in a distributed file system or a distributed database. Middle data of incremental streaming data can be buffered using an in-memory database. Result data may be first buffered by a file system and then stored in a distributed database.

In the embodiment, depending on data types, a suitable data collection mode is automatically selected to perform data collection, and different type of data is subject to particular data processing according to an adapted data processing model. Thus, suitable and targeted data collection and processing can be automatically performed according to data properties of heterogeneous data itself, data processing efficiency is increased and the quality of the processed data is improved, and thus the data after processing becomes operable and uniform data which is helpful for data fusion.

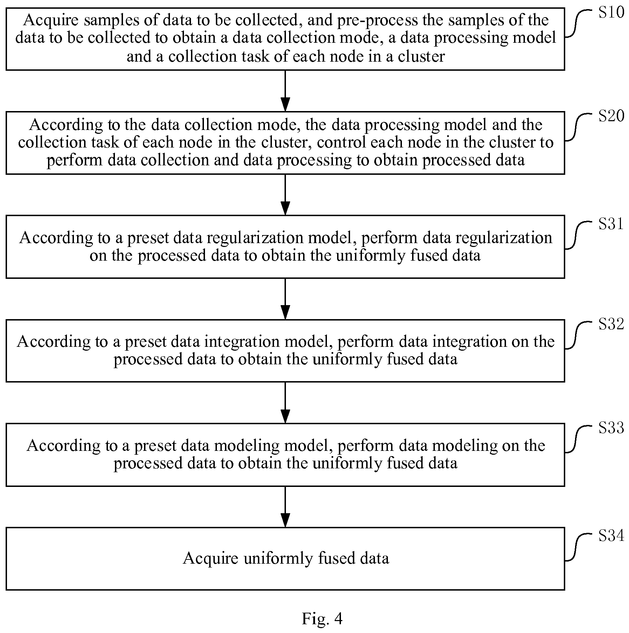

Fig. 4 is a flowchart illustratively showing a data processing method according to an embodiment of the present disclosure. On the basis of the embodiment described with reference to Fig. 1, step S30 may include the following steps.

In step S31, according to a preset data regularization model, data regularization is performed on the processed data.

According to a preset data regularization model, uniform data regularization can be performed on the data which is processed differently. The data regularization may include uniform format conversion, uniform coding, data modification and filing of missing data. In this manner, uniformly regularized data is obtained.

In step S32, according to a preset data integration model, data integration is performed on the processed data.

According to a preset data integration model, data integration can be performed on the data which is processed differently or the data after regularization. Data integration may include data association, data merge, data grouping, data gathering, so that uniform, commonly used and basic data set can be formed.

In step S33, according to a preset data modeling model, data modeling is performed on the processed data.

According to a preset data modeling model, model design or index construction may be performed on the data which is processed differently, or the data after regularization, or the data after data integration, so as to form basic data support for later higher level data analysis and mining.

Any one or more of steps S31, S32 and S33 may be performed.

In step S34, uniformly fused data is obtained.

Depending on conditions after data processing, one or more of the following operations may be performed on the processed data: uniform fusion operation of data regularization, uniform fusion operation of data integration, and uniform fusion operation of data modeling. Data regularization, data integration and data modeling can be performed sequentially to complete uniform fusion, or data regularization and data integration may be performed sequentially to complete uniform fusion, or other uniform fusion operations may be performed to complete uniform fusion. Uniform fusion operation like data regularization, data integration or data modeling may be performed according to actual needs of uniform fusion. Then, uniformly fused data can be obtained.

In the embodiment, uniform fusion operation like data regularization, data integration, or data modeling is performed on the processed data, and thus data which is scattered but has inherent relevance with each other are automatically associated. This can improve data fusion degree, and increase usability and practicability of finally obtained data, thereby providing basic data support and data quality guarantee for later big data analysis and data value exploration.

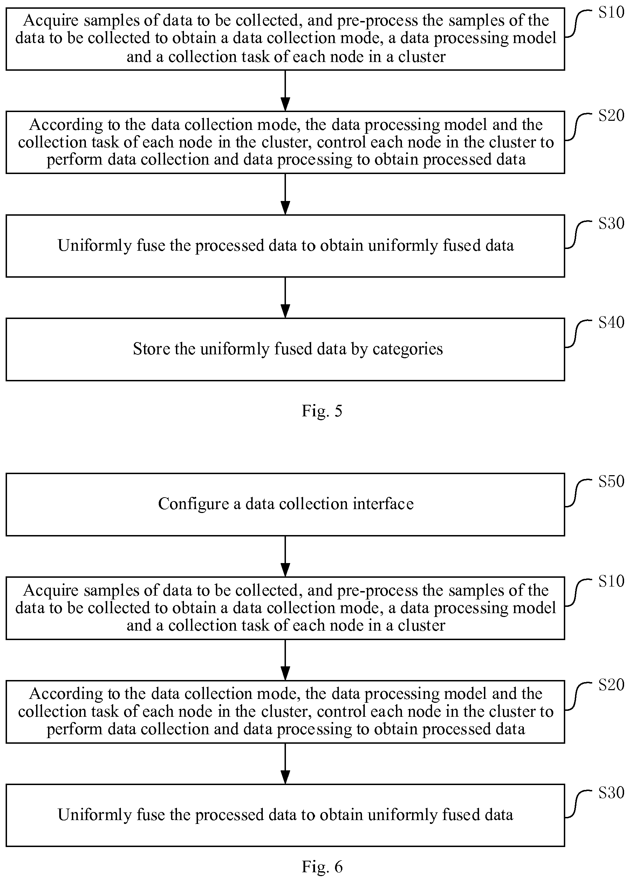

Fig. 5 is a flowchart illustratively showing a data processing method according to an embodiment of the present disclosure. On the basis of any one of embodiments described with reference to Figs. 1 to 4 (for example, on the basis of the embodiment described with reference to Fig. 1), step S30 may further include the following steps.

In step S40, the uniformly fused data is stored by categories.

Different data can be stored by categories. The uniformly fused data is stored in a distributed data warehouse, and particular data may be stored in a dedicated database. For example, spatio-temporal data such as traffic and meteorology data may be stored in a spatio-temporal database, picture data such as social network data may be stored in a picture database. The collected original data of semi-structured data and non-structured data may be stored in a distributed file system. The collected original data of structured data may be stored in a distributed database. The processed data of semi-structured data and non-structured data may be stored in a distributed database. Processing of streaming data may be conducted in a real-time database

In the embodiment, the data collection mode and the data processing model are automatically adapted, the collected data is processed according to the data processing model, the processed data is uniformly fused, and the uniformly fused data is stored by categories for later search of big data by categories and analysis of big data, and thus the practicability of the final data and convenience in data retrieval can be improved.

Fig. 6 is a flowchart illustratively showing a data processing method according to an embodiment of the present disclosure. On the basis of the embodiment described with reference to Fig. 1, the method further includes the following step S50 before step S10.

In step S50, a data collection interface is configured.

The data collection interface for different data sources is uniformly configured, and a connection test is performed for the configuration. If the connection is successful, the configuration file is uniformly distributed, and each node in the cluster is controlled to connect to the data collection interface for different data sources, so as to collect data by the successfully configured data collection interface. If the connection test is failed, reconfiguration of the data collection interface is performed.

The acquiring of samples of data to be collected and pre-processing of the samples of the data to be collected in step S10 may include acquiring the samples of the data to be collected by the data collection interface, and pre-processing the samples of the data to be collected.

Each node in the cluster is controlled to collect the data to be collected by the data collection interface to obtain the samples of the data to be collected and the load conditions of all nodes in the clustered. The samples of the data to be collected include a preset number of data to be collected. The load conditions of all nodes include a data collection rate, performance, response status and load capacity of each node during the data collection so that resource and load condition of each node during the collection of the samples of the data to be collected can be known.

The samples of the data to be collected are pre-processed, the basic quality attributes of the samples of the data to be collected are detected and determined to obtain a quality assessment report.

The controlling of each node in the cluster to perform data collection and data processing in step S20 may include controlling each node in the cluster to perform data collection by the data collection interface, and controlling each node in the cluster to perform data processing on the collected data.

Each node in the cluster is controlled to perform data collection by the data collection interface in the adapted collection mode according to the collection task which is assigned to the node. For example, for dynamic streaming data, data collection is performed in an incremental real-time collection mode by the data collection interface; for structured data, data collection is performed in a full non-real-time collection mode by the data collection interface; for semi-structured data and non-structured data, data collection is performed in a full non-real-time collection mode to obtain the collected data by the data collection interface. Each node in the cluster is controlled to process data which is collected by this node in the adapted data processing model. For example, according to a data processing model for dynamic streaming data, processing steps of data extraction, data filtering, data association, data conversion and data classification are sequentially performed. According to a processing model for structured data, processing steps of data extraction and abnormal cleaning are sequentially performed. According to a data processing model for semi-structured data and non-structured data, processing steps of data extraction, data parsing, abnormal cleaning, data segmentation, and feature extraction are sequentially performed. In this way, different heterogeneous data can be collected and processed depending on properties of data itself.

In the embodiment, the data collection interface is uniformly configured by giving consideration to configuration of data collection interface of static, dynamic, structured, semi-structured, and non-structured heterogeneous data. Thus, the data collection interface(s) can be uniformly configured when multi-sourced data collection is performed to prepare for multi-sourced heterogeneous data collection. Consequently, the embodiment can control each node in the cluster to collect multi-sourced heterogeneous data by the data collection interface, thereby increasing data collection speed.

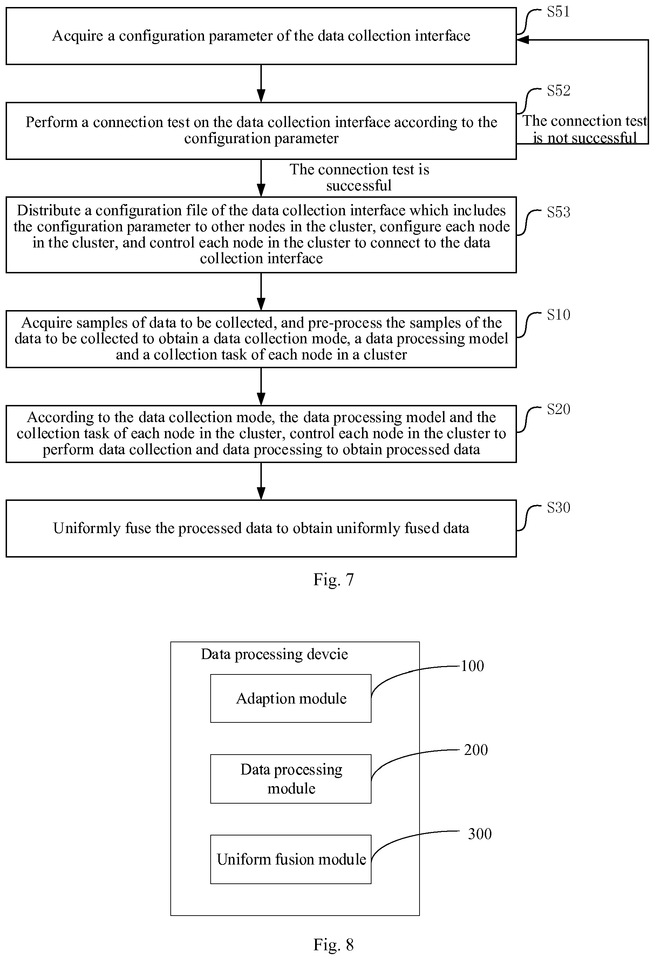

Fig. 7 is a flowchart illustratively showing a data processing method according to an embodiment of the present disclosure. On the basis of the embodiment described with reference to Fig. 6, step S50 may include the following steps.

In step S51, a configuration parameter of the data collection interface is acquired.

A user may be provided with preset interface configuration templates, including a file system interface configuration template, a database interface configuration template and a network interface configuration template, so that the user can select a template. According to the interface configuration template selected by the user, the configuration parameter in the template can be acquired.

Alternatively, a user may be provided with preset interface configuration templates, including a file system interface configuration template, a database interface configuration template and a network interface configuration template. After the user selects a template, the configuration parameter in the template may be modified according to actual conditions. Alternatively, the configuration parameter of the data collection interface may be set in a user-defined manner, so as to flexibly set the parameter according to needs.

The configuration parameter of the data collection interface may include key interface parameters of the data collection interface, for example, the network address, the port number and the path.

In step S52, a connection test is performed on the data collection interface according to the configuration parameter.

According to the acquired configuration parameter of the data collection interface, a main node in the cluster is controlled to connect to the data collection interface to test whether connection to the data collection interface according to the obtained configuration parameter is successful. If the connection to the data collection interface according to the obtained configuration parameter is successful, the connection test is successful; if the connection to the data collection interface according to the obtained configuration parameter is failed, the connection test is not successful.

In step S53, if the connection test is successful, a configuration file of the data collection interface which includes the configuration parameter is distributed to other nodes in the cluster, each node in the cluster is configured, and each node in the cluster is controlled to connect to the data collection interface. If the connection test is not successful, the flow proceeds to step S51.

If the connection test is successful, the obtained configuration parameter of the data collection interface is solidified into the configuration file of the data collection interface, the configuration file is distributed to other nodes in the cluster, and each node in the cluster is controlled to connect to the data collection interface according to the obtained data collection interface.

If the connection test is not successful, the user is notified of the unsuccessful connection to the data collection interface. The user may change an interface configuration template, or may modify the configuration parameter of the data collection interface in the template, or may define and set the configuration parameter of the data collection interface, so as to re-acquire a configuration parameter of the data collection interface.

In the embodiment, the configuration parameter of the data collection interface is acquired, and a correct and available configuration parameter of the data collection interface can be acquired by the connection test so as to connect to the data collection interface. In this way, the configuration of the data collection interface is finished. Thus, the embodiment can realize uniform and automatic configuration and connection of multi-sourced data collection interface, prepare and provide support for data collection, and increase the efficiency of data collection and processing.

Fig. 8 is a block diagram illustratively showing a data processing device according to an embodiment of the present disclosure. The data processing device may include an adaption module 100, a data processing module 200 and a uniform fusion module 300.

The adaption module 100 is configured to acquire samples of data to be collected, and pre-process the samples of the data to be collected to obtain a data collection mode, a data processing model and a collection task of each node in a cluster.

The adaption module 100 controls each node in a cluster to collect the data to be collected to obtain samples of data to be collected and load conditions of all nodes in the cluster. The samples of the data to be collected include a preset number of data to be collected. The load conditions of all nodes in the cluster include a data collection rate, performance, response status and load capacity of each node during the data collection so that resource and load condition of each node during the collection of the samples of the data to be collected can be known.

The adaption module 100 pre-processes the samples of the data to be collected, and the basic quality attributes of the samples of the data to be collected are detected and determined to obtain a quality assessment report.

According to the quality assessment report and the load conditions of all nodes in the cluster, the adaption module 100 determines a data collection mode, adapts a data processing model, and assigns a collection task for each node in the cluster.

Depending on data types, different data collection modes can be adapted. Different data collection modes may include full, incremental, non-real-time, real-time modes and so on. For example, for dynamic streaming data, an incremental real-time collection mode is adapted; for structured data, a full non-real-time collection mode is adapted; for semi-structured data and non-structured data, a full non-real-time collection mode is adapted. Alternatively, other collection modes can be used, and the data collection modes can be set flexibly according on actual needs.

Depending on data types, different data processing models can be adapted. Data of different types, for example, streaming data, bulk data, structured data, semi-structured data and non-structured data, can be processed in different manners. Data processing models can be pre-configured for processing of streaming data, non-structured picture data, non-structured audio and video data, non-structured text data, semi-structured data, and structured data, and the models can be directly adapted and called to support model reuse and revisions.

The data processing models may include the follows. For dynamic streaming data, the model may include sequential processing steps of data extraction, data filtering, data association, data conversion and data classification. For structured data, the model may include sequential processing steps of data extraction and abnormal cleaning. For semi-structured data and non-structured data, the model may include sequential processing steps of data extraction, data parsing, abnormal cleaning, data segmentation, and feature extraction. It should be noted that the data processing models can be directly adapted, and the data processing models can also be finely adjusted, and the data processing steps and models can be flexibly set according to actual processing needs.

Each node in the cluster is assigned with a collection task. This realizes a dynamic adjustment of load of each node in the cluster, can remove or reduce load imbalance among all nodes in the system, and can thereby improve efficiency in data collection and processing.

The data processing module 200 is configured to, according to the data collection mode, the data processing model and the collection task of each node in the cluster, control each node in the cluster to perform data collection and data processing to obtain processed data.

The data processing module 200 controls each node in the cluster to perform data collection in the adapted collection mode according to the collection task which is assigned to the node. For example, for dynamic streaming data, data collection is performed in an incremental real-time collection mode; for structured data, data collection is performed in a full non-real-time collection mode; for semi-structured data and non-structured data, data collection is performed in a full non-real-time collection mode to obtain the collected data. The data processing module 200 controls each node in the cluster to process data which is collected by this node in the adapted data processing model. For example, according to a data processing model for dynamic streaming data, processing steps of data extraction, data filtering, data association, data conversion and data classification are sequentially performed. According to a processing model for structured data, processing steps of data extraction and abnormal cleaning are sequentially performed. According to a data processing model for semi-structured data and non-structured data, processing steps of data extraction, data parsing, abnormal cleaning, data segmentation, and feature extraction are sequentially performed. In this way, different heterogeneous data can be collected and processed depending on properties of data itself to obtain processed data.

The uniform fusion module 300 is configured to uniformly fuse the processed data to obtain uniformly fused data.

The uniform fusion module 300 performs data regularization, data integration or data modeling on the data after collection and processing. By data regularization and data integration, the data which has inherent relevance with each other has uniform format and is effectively integrated. The data modeling provides functions like data model design, and data index constructing. In this way, data which is scattered but has inherent relevance with each other can be associated to obtain uniformly fused data.

In the embodiment, the adaption module 100 analyzes heterogeneous data according to samples, and automatically adapts a data collection mode and a data processing model. The data processing module 200 collects and processes data, and adjusts loads of all nodes in a cluster to arrive at a load balance. The uniform fusion module 300 uniformly fuses various heterogeneous data which has inherent relevance with each other. The embodiment can effectively solve the problem of low efficiency and fusion degree in big data processing in related arts, can improve the efficiency in data processing and fusion degree of data, and consequently increase usability and practicability of the obtained data and ensure data quality for big data processing and value exploration.

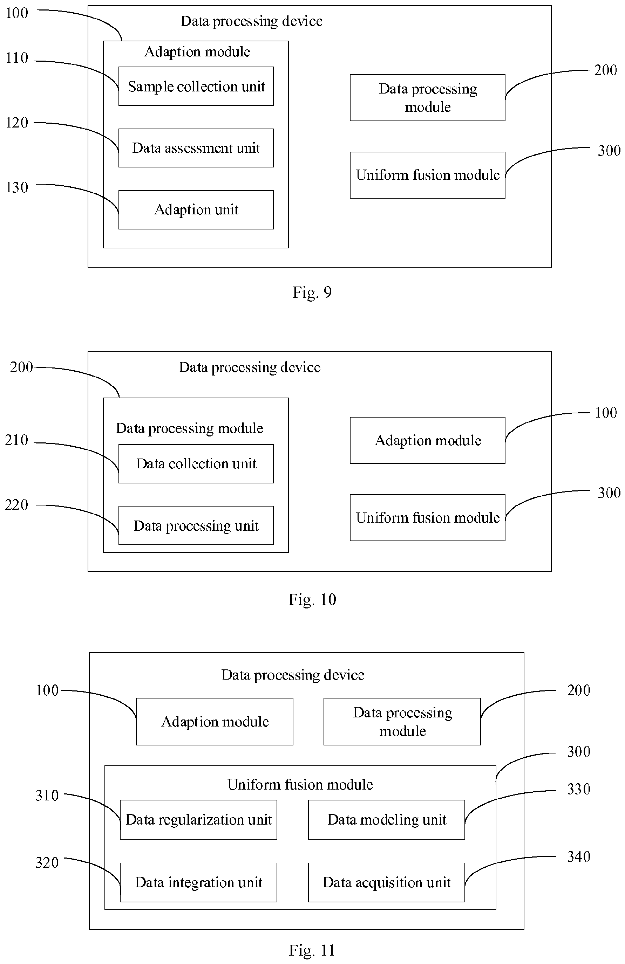

Fig. 9 is a block diagram illustratively showing a data processing device according to an embodiment of the present disclosure. On the basis of the embodiment described with reference to Fig. 8, the adaption module 100 includes a sample collection unit 110, a data assessment unit 120 and an adaption unit 130.

The sample collection unit 110 is configured to control each node in the cluster to read the data to be collected and acquire the samples of the data to be collected and a load condition of each node in the cluster.

The sample collection unit 110 controls each node in a cluster to collect a preset number of data to be collected to obtain samples of the data to be collected and load conditions of all nodes in the cluster during the data collection. The samples of the data to be collected include a preset number of data to be collected. The load conditions of all nodes in the cluster include a data collection rate, performance, response status and load capacity of each node during the data collection.

The data assessment unit 120 is configured to assess the samples of the data to be collected to obtain a quality assessment report which includes a data type, data coding, a data redundancy, a data sparseness, and a data transmission speed.

The data assessment unit 120 controls each node in the cluster to assess data quality of the samples of the data collected by the node. The data assessment may include a data type, data coding, a data redundancy, a data sparseness, and a data transmission speed of the samples of the data collected by each node in the cluster. Then, the data assessment unit gathers and collates the data quality reports of nodes in the cluster to form a final quality assessment report. The final quality assessment report is a final test and verdict of the basic quality attribute of the samples of the data to be collected, including a final data type, data coding, a data redundancy, a data sparseness, and a data transmission speed of the samples of data to be collected.

The data assessment unit 120 acquires and gathers the samples of the data to be collected which are collected by each node, and determines and judges the basic data quality attribute of the gathered samples of the data to be collected. The basic data quality attribute may include a data type, data coding, a data redundancy, a data sparseness, and a data transmission speed. Then, a quality assessment report can be obtained.

The adaption unit 130 is configured to, according to the quality assessment report and load conditions of all nodes in the cluster, adapt the data collection mode and the data processing model, and assigning the collection task for each node in the cluster.

According to the data type and the data transmission speed in the quality assessment report, the adaption unit 130 adapts a data collection mode. According to the data coding, the data redundancy and the data sparseness in the quality assessment report, the adaption unit 130 adapts a data processing model. According to the data transmission speed in the quality assessment report and load conditions of all nodes in the cluster, the adaption unit 130 assigns a collection task for each node in the cluster.

In the embodiment, the sample collection unit 110 acquires samples of the data to be collected. By pre-processing of the samples of the data to be collected, the data assessment unit 120 obtains the quality assessment report and the load conditions of all nodes in the cluster. According to the quality assessment report and the load conditions of all nodes in the cluster, the adaption unit 130 automatically adapts the data collection mode and the data processing model. Thus, the embodiment can more effectively and reasonably perform data collection and data processing for various heterogeneous data (including various dynamic streaming data, static structured data, semi-structured data and non-structured data) according to data properties of data itself. Collection tasks can be reasonably assigned so that each node in the cluster can perform data collection according to a corresponding collection task, thereby realizing load balancing among all nodes in the cluster and improving the cluster processing capability.

Fig. 10 is a block diagram illustratively showing a data processing device according to an embodiment of the present disclosure. On the basis of the embodiment described with reference to Fig. 8, the data processing module 200 includes a data collection unit 210 and a data processing unit 220.

The data collection unit 210 is configured to control each node in the cluster to perform data collection in the collection mode according to the collection task corresponding to the node.

The data collection unit 210 controls each node in the cluster to perform data collection in the adapted collection mode according to the corresponding collection task which is assigned to the node. For example, for dynamic streaming data, data collection is performed in an incremental real-time collection mode and the collected data is buffered. For structured data, data collection is performed in a full non-real-time collection mode. For semi-structured data and non-structured data, data collection is performed in a full non-real-time collection mode. The non-structured data may be further classified into text data, audio data, video data, picture data, and so on, and different non-structured data can have different collection manner. For example, for text data, text data collection is performed; for audio data, audio data collection is performed; for video data, video data collection is performed; for picture data, picture data collection is performed. In this way, collected data can be obtained.

The data processing unit 220 is configured to control each node in the cluster to process collected data according to the data processing model to obtain processed data.

The data processing unit 220 controls each node in the cluster to perform data processing on the data which is collected by the node according to the adapted data processing model. For example, according to a data processing model for dynamic streaming data, processing steps of data extraction, data filtering, data association, data conversion and data classification are sequentially performed. According to a processing model for structured data, processing steps of data extraction and abnormal cleaning are sequentially performed. According to a data processing model for semi-structured data and non-structured data, processing steps of data extraction, data parsing, abnormal cleaning, data segmentation, and feature extraction are sequentially performed. After data processing is finished, processed data is obtained. The non-structured data may be further classified into text data, audio data, video data, picture data, and so on, and different non-structured data can have different processing manner. For example, according to a data processing model, processing steps like text data collection, parsing of text structure and coding, repetition and abnormal cleaning, Chinese word segmentation and feature extraction are performed on text data.

Depending on collection mode, the data processing unit 220 stores or buffers middle data and metadata generated during the data processing and result data after the data processing by suitable storage medium. For example, result data which is generated by performing data extraction, data parsing and abnormal cleaning on the original data to be collected, result data which is generated by performing data segmentation of the original data to be collected, and result data which is generated by performing feature extraction on the original data to be collected can be stored in a distributed file system or a distributed database. Middle data of incremental streaming data can be buffered using an in-memory database. Result data may be first buffered by a file system and then stored in a distributed database.

In the embodiment, depending on data types, the data collection unit 210 automatically selects a suitable data collection mode to perform data collection, and the data processing unit 220 performs particular data processing on different type of data according to an adapted data processing model. Thus, suitable and targeted data collection and processing can be automatically performed according to data properties of heterogeneous data itself, data processing efficiency is increased and the quality of the processed data is improved, and thus the data after processing becomes operable and uniform data which is helpful for data fusion.

Fig. 11 is a block diagram illustrative showing a data processing device according to an embodiment of the present disclosure. On the basis of the embodiment described with reference to Fig. 8, the uniform fusion module 300 includes a data acquisition unit 340 and one or more of a data regularization unit 310, a data integration unit 320 and a data modeling unit 330.

The data regularization unit 310 is configured to, according to a preset data regularization model, perform data regularization on the processed data.

According to a preset data regularization model, the data regularization unit 310 performs uniform data regularization on the data which is processed differently. The data regularization may include uniform format conversion, uniform coding, data modification and filing of missing data. In this manner, uniformly regularized data is obtained.

The data integration unit 320 is configured to, according to a preset data integration model, perform data integration on the processed data to obtain the uniformly fused data.

According to a preset data integration model, the data integration unit 320 performs data integration on the data which is processed differently or the data after regularization. Data integration may include data association, data merge, data grouping, data gathering, so that uniform, commonly used and basic data set can be formed.

The data modeling unit 330 is configured to, according to a preset data modeling model, perform data modeling on the processed data.

According to a preset data modeling model, the data modeling unit 330 performs model design or index construction on the data which is processed differently, or the data after regularization, or the data after data integration, so as to form basic data support for later higher level data analysis and mining.

The data acquisition unit 340 is configured to acquire the uniformly fused data.

Depending on conditions after data processing, the data acquisition unit 340 controls the data regularization unit 310 to perform uniform fusion operation of data regularization, controls the data integration unit 320 to perform the uniform fusion operation of data integration, and controls the data modeling unit 330 to perform uniform fusion operation of data modeling. Data regularization, data integration and data modeling can be performed sequentially to complete uniform fusion, or data regularization and data integration may be performed sequentially to complete uniform fusion, or other uniform fusion operations may be performed to complete uniform fusion. Uniform fusion operation like data regularization, data integration or data modeling may be performed according to actual needs of uniform fusion. Then, the data acquisition unit 340 can obtain uniformly fused data.

In the embodiment, the data acquisition unit 340 controls the data regularization unit 310, the data integration unit 320 and the data modeling unit 330 to perform uniform fusion operation on the processed data, and thus data which is scattered but has inherent relevance with each other are automatically associated. This can improve data fusion degree, and increase usability and practicability of finally obtained data, thereby providing basic data support and data quality guarantee for later big data analysis and data value exploration.

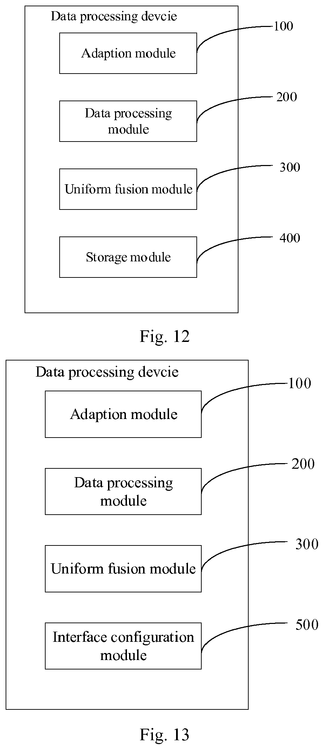

Fig. 12 is a block diagram illustratively showing a data processing device according to an embodiment of the present disclosure. On the basis of any one of embodiments described with reference to Figs. 8 to 11 (for example, on the basis of the embodiment described with reference to Fig. 8), the data processing device may further include a storage module 400.

The storage module 400 is configured to store the uniformly fused data by categories.

The storage module 400 can store different data by categories. The uniformly fused data is stored in a distributed data warehouse, and particular data may be stored in a dedicated database. For example, the storage module 400 stores spatio-temporal data such as traffic and meteorology data in a spatio-temporal database. The storage module 400 stores picture data such as social network data in a picture database. The storage module 400 stores the collected original data of semi-structured data and non-structured data in a distributed file system. The storage module 400 stores the collected original data in a distributed database. The storage module 400 stores the processed data of semi-structured data and non-structured data in a distributed database. The storage module 400 conducts processing of streaming data in a real-time database.

In the embodiment, the adaption module 100 automatically adapts the data collection mode and the data processing model, the data processing module 200 processes the collected data according to the data processing model, the uniformly fused module 300 uniformly fuses the processed data, and the storage module 400 stores the uniformly fused data by categories for later search of big data by categories and analysis of big data, and thus the practicability of the final data and convenience in data retrieval can be improved.

Fig. 13 is a block diagram illustratively showing a data processing device according to an embodiment of the present disclosure. On the basis of embodiment described with reference to Fig. 8, the data processing device further includes an interface configuration module 500.

The interface configuration module 500 is configured to configure a data collection interface. The interface configuration module 500 uniformly configures the data collection interface for different data sources, and a connection test is performed for the configuration. If the connection is successful, the interface configuration module 500 uniformly distributes the configuration file, and each node in the cluster is controlled to connect to the data collection interface for different data sources, so as to collect data by the successfully configured data collection interface. If the connection test is failed, the interface configuration module 500 reconfigures the data collection interface.

The acquiring of samples of data to be collected and pre-processing of the samples of the data to be collected by the adaption module 100 may include acquiring by the adaption module 100 the samples of the data to be collected by the data collection interface, and pre-processing the samples of the data to be collected.

The adaption module 100 controls each node in the cluster to collect the data to be collected by the data collection interface to obtain the samples of the data to be collected and the load conditions of all nodes in the clustered. The samples of the data to be collected include a preset number of data to be collected. The load conditions of all nodes include a data collection rate, performance, response status and load capacity of each node during the data collection so that resource and load condition of each node during the collection of the samples of the data to be collected can be known.

The adaption module 100 pre-processes the samples of the data to be collected, and the basic quality attributes of the samples of the data to be collected are detected and determined to obtain a quality assessment report.

The controlling of each node in the cluster to perform data collection and data processing by the data processing module 200 may include controlling by the data processing module 200 each node in the cluster to perform data collection by the data collection interface, and controlling each node in the cluster to perform data processing on the collected data.

The data processing module 200 controls each node in the cluster to perform data collection by the data collection interface in the adapted collection mode according to the collection task which is assigned to the node. For example, for dynamic streaming data, data collection is performed in an incremental real-time collection mode by the data collection interface; for structured data, data collection is performed in a full non-real-time collection mode by the data collection interface; for semi-structured data and non-structured data, data collection is performed in a full non-real-time collection mode to obtain the collected data by the data collection interface.

The data processing module 200 controls each node in the cluster to process data which is collected by this node in the adapted data processing model. For example, according to a data processing model for dynamic streaming data, processing steps of data extraction, data filtering, data association, data conversion and data classification are sequentially performed. According to a processing model for structured data, processing steps of data extraction and abnormal cleaning are sequentially performed. According to a data processing model for semi-structured data and non-structured data, processing steps of data extraction, data parsing, abnormal cleaning, data segmentation, and feature extraction are sequentially performed. In this way, different heterogeneous data can be collected and processed depending on properties of data itself to obtain processed data.

In the embodiment, the interface configuration module 500 uniformly configures the data collection interface by giving consideration to configuration of data collection interface of static, dynamic, structured, semi-structured, and non-structured heterogeneous data. Thus, the data collection interface(s) can be uniformly configured when multi-sourced data collection is performed to prepare for multi-sourced heterogeneous data collection. Consequently, the adaption module 100 and the data processing module 200 can control each node in the cluster to collect multi-sourced heterogeneous data by the data collection interface, thereby increasing data collection speed.

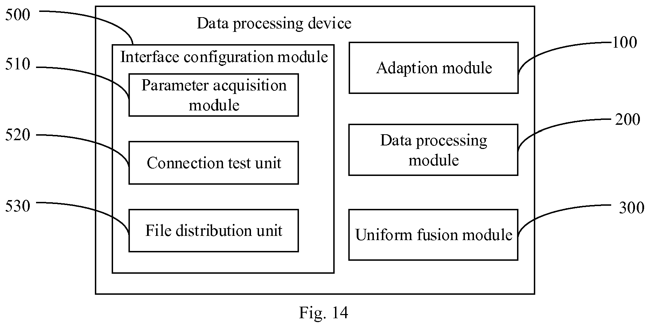

Fig. 14 is a block diagram illustratively showing a data processing device according to an embodiment of the present disclosure. On the basis of the embodiment described with reference to Fig. 13, the interface configuration module 500 includes a parameter acquisition unit 510, a connection test unit 520 and a file distribution unit 530.

The parameter acquisition unit 510 is configured to acquire a configuration parameter of the data collection interface.

The parameter acquisition unit 510 may provide a user with preset interface configuration templates, including a file system interface configuration template, a database interface configuration template and a network interface configuration template, so that the user can select a template. According to the interface configuration template selected by the user, the configuration parameter in the template can be acquired.

Alternatively, the parameter acquisition unit 510 may provide a user with preset interface configuration templates, including a file system interface configuration template, a database interface configuration template and a network interface configuration template. After the user selects a template, the configuration parameter in the template may be modified according to actual conditions.

Alternatively, the configuration parameter of the data collection interface may be set in a user-defined manner, and the parameter acquisition unit 510 can obtain the configuration parameter of the data collection interface defined by the user.

The configuration parameter of the data collection interface may include key interface parameters of the data collection interface, for example, the network address, the port number and the path.

The connection test unit 520 is configured to perform a connection test on the data collection interface according to the configuration parameter.

According to the acquired configuration parameter of the data collection interface, the connection test unit 520 controls a main node in the cluster to connect to the data collection interface to test whether connection to the data collection interface according to the obtained configuration parameter is successful. If the connection to the data collection interface according to the obtained configuration parameter is successful, the connection test unit 520 confirms that the connection test is successful; if the connection to the data collection interface according to the obtained configuration parameter is failed, the connection test unit 520 determines that the connection test is not successful.

The file distribution unit 530 is configured to, if the connection test is successful, distribute a configuration file of the data collection interface which includes the configuration parameter to other nodes in the cluster, configure each node in the cluster, and control each node in the cluster to connect to the data collection interface.

If the connection test is successful, the file distribution unit 530 solidifies the obtained configuration parameter of the data collection interface into the configuration file of the data collection interface, distributes the configuration file to other nodes in the cluster, and controls each node in the cluster to connect to the data collection interface according to the obtained data collection interface.

The parameter acquisition unit 510 is further configured to, if the connection test is not successful, acquire a configuration parameter of the data collection interface.

If the connection test is not successful, the parameter acquisition unit 510 notifies the user of the unsuccessful connection to the data collection interface. The user may change an interface configuration template, or may modify the configuration parameter of the data collection interface in the template, or may define and set the configuration parameter of the data collection interface, so that the parameter acquisition unit 510 re-acquires a configuration parameter of the data collection interface.

In the embodiment, the parameter acquisition unit 510 acquires the configuration parameter of the data collection interface, the connection test unit 520 tests the connection to obtain a correct and available configuration parameter of the data collection interface, and the file distribution unit 530 connects to the data collection interface. In this way, the configuration of the data collection interface is finished. Thus, the embodiment can realize uniform and automatic configuration and connection of multi-sourced data collection interface, prepare and provide support for data collection, and increase the efficiency of data collection and processing.

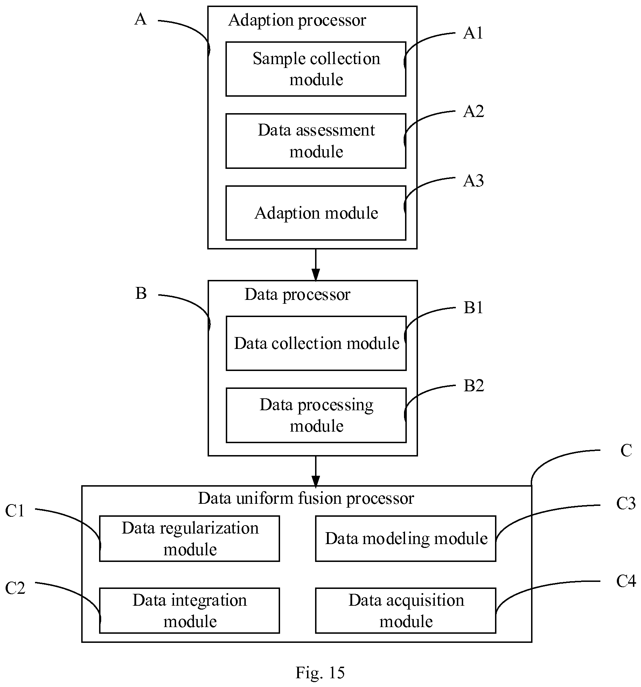

Fig. 15 is a block diagram illustratively showing a data processing system according to an embodiment of the present disclosure. The system includes an adaption processor A, a data processer B and a data uniform fusion processor C.

The adaption processor A is configured to acquire samples of data to be collected, and pre-process the samples of the data to be collected to obtain a data collection mode, a data processing model and a collection task of each node in a cluster.

The adaption processor A may include a sample collection module A1, a data assessment module A2 and an adaption module A3.

The sample collection module A1 is configured to acquire samples of data to be collected, the data assessment module A2 is configured to pre-processes the samples of the data to be collected, and the adaption module A3 is configured to adapt a data collection mode and a data processing model and assign a collection task for each node in a cluster.

The data processor B is configured to, according to the data collection mode, the data processing model and the collection task of each node in the cluster, control each node in the cluster to perform data collection and data processing to obtain processed data.

The data processing processor B includes a data collection module B1 and a data processing module B2.

The data collection module B1 is configured to collect data according to the adapted data collection mode and the collection task assigned to each node in the cluster, and the data processing module B2 is configured to process the collected data according to the adapted data processing model to obtain the processed data.

The data uniform fusion processor C is configured to uniformly fuse the processed data to obtain uniformly fused data.

The data uniform fusion processor C may include a data regularization module C1, a data integration module C2, a data modeling module C3 and a data acquisition module C4.

The data regularization module C1 is configured to perform data regularization on the processed data according to a preset data regularization model. The data integration module C2 is configured to perform data integration on the processed data according to a preset data integration model. The data modeling module C3 is configured to perform data modeling on the processed data according to a preset data modeling model. The data acquisition module C4 is configured to control the data regularization module C1, the data integration module C2 and the data modeling module C3 to uniformly fuse data to obtain uniformly fused data.

In the embodiment, the adaption processor A analyzes heterogeneous data according to samples, and automatically adapts a data collection mode and a data processing model. The data processer B collects and processes data, and adjusts loads of all nodes in a cluster to arrive at a load balance. The data uniform fusion processor C uniformly fuses various heterogeneous data which has inherent relevance with each other. The embodiment can effectively solve the problem of low efficiency and fusion degree in big data processing in related arts, can improve the efficiency in data processing and fusion degree of data, and consequently increase usability and practicability of the obtained data and ensure data quality for big data processing and value exploration.

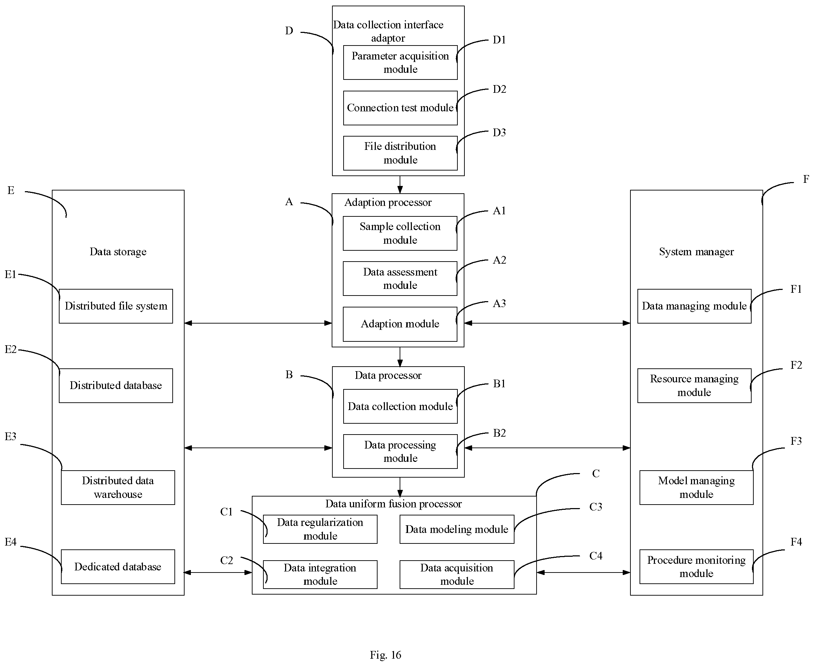

Fig. 16 is a block diagram illustratively showing a data processing system according to an embodiment of the present disclosure. On the basis of the embodiment described with reference to Fig. 15, the system may further include a data collection interface adaptor D, a data storage E and a system manager F.

The data collection interface adaptor D is configured to configure a data collection interface. The data collection interface adaptor D may include a parameter acquisition module D1, a connection test module D2 and a file distribution module D3.

The parameter acquisition module D1 is configured to acquire a configuration parameter of the data collection interface. The connection test module D2 is configured to test whether the acquired configuration parameter of the data collection interface can enable connection to the data collection interface. The file distribution module D3 is configured to, if the connection test is successful, distribute a configuration file of the data collection interface which includes the configuration parameter to other nodes in the cluster, configure all nodes in the cluster, and controls all nodes in the cluster to connect to the data collection interface.

The data storage E is configured to store the uniformly fused data by categories.

The data storage E may include a distributed file system E1, a distributed database E2, a distributed data warehouse E3 and a dedicated database E4.

The storage E stores the uniformly fused data in the distributed data warehouse E3, and stores particular data in the dedicated database E4, for example, stores spatio-temporal data such as traffic and meteorology data in the dedicated database E4, and stores picture data such as social network data in the dedicated database E4.

The storage E stores the collected original data of semi-structured data and non-structured data in the distributed file system E1. The storage E stores the collected original data of structured data in a distributed database E2. The storage E stores the processed data of semi-structured data and non-structured data in the distributed database E2. The storage E conducts processing of streaming data in the dedicated database E4.

The system manager F includes a data managing module F1, a resource managing module F2, a model managing module F3 and a procedure monitoring module F4.

The data managing module F1 is configured to manage a configuration file of the data collection interface, a connection test result of the data collection interface, samples of data to be collected, a quality assessment report and load conditions of all nodes in the cluster.

The data managing module F1 stores and distributes the configuration file of the data collection interface, stores and feeds back to a user the connection test result of the data collection interface, stores or buffers samples of the data to be collected, assesses the samples of the data to be collected, acquires and stores a quality assessment report, and acquires and stores the load conditions of all nodes in the cluster to make other modules search or retrieve. The resource managing module F2 is configured to manage samples of data to be collected, data collection, data processing, uniform fusion and storage of data, and resource consumption condition of the cluster, and control load balancing of all nodes in the cluster. The resource managing module F2 is configured to control the load balancing among all nodes in the cluster according to the resource consumption in the cluster during collection procedure of the samples of the data to be collected, the procedure of the data quality assessment, the procedure of the data collection, the procedure of data processing, the procedure of the uniform fusion and the procedure of the data storing.

The model managing module F3 is configured to manage a data collection interface configuration template, a data assessment template, a data collection template, a data processing model, a data regularization model, a data integration model and a data modeling model.

The model managing module F3 is configured to: store and modify a configuration template of the data collection interface; manage a data assessment template; store, adapt, call and modify a data collection template; store, adapt, call and modify a data processing model; store and call a data regularization model; store and call a data integration model; construct, store and call a data modeling model.

The procedure monitoring module F4 is configured to monitor procedures of configuration of the data collection interface, reading of samples of data to be collected, data assessment, data processing, uniform fusion and storage of data, and record and process completion status, a middle error and an abnormal during the procedures of the configuration of the data collection interface, reading of samples of data to be collected, data assessment, data processing, uniform fusion and storage of data.

The procedure monitoring module F4 is configured to monitor the operation status and resource usage of each module in the data processing system, record and process errors and abnormal generated during the running of each module in the data processing system.

In the embodiment, the system manager F monitors the operation states of the adaption processor A, the data processor B, the data uniform fusion processor C, the data collection interface adaptor D and the data storage E, data processing and load conditions, controls procedure of each module, and realizes centralized management on various data in the data processing system. The embodiment can realize uniform configuration of multi-sourced data interface, automatic adaption of collection mode and processing model of heterogeneous data, and can uniformly fused the heterogeneous data and store the data by categories. Thus, the embodiment can improve the efficiency in data processing and fusion degree, increase usability and practicability of the obtained data and ensure data quality for big data analysis and value exploration.

Exemplary embodiments of the present disclosure have been described above, and however, any equivalent structure or equivalent process change made using the contents of the specification and the accompanying drawings of the present disclosure or directly or indirectly application to other related technical fields also fall within the scope as defined by the appended claims.

A person of ordinary skill in the art may understand that all or part of the steps in the foregoing methods may be implemented by a program instructing relevant hardware (for example, a processor), and the program may be stored in a computer-readable storage medium, such as a read-only memory, a magnetic disk, and so on. Optionally, all or part of the steps of the above embodiments may also be implemented by using one or more integrated circuits. Correspondingly, each module/unit in the above embodiments can be implemented in the form of hardware, for example, integrated circuits can be used to realize corresponding functions, or can be implemented in the form of software function modules, for example, the processor executes the program/instructions stored in the memory to achieve corresponding functions. The embodiments of the present disclosure are not limited to any particular combination of hardware and software.

### Industrial Applicability

In embodiments of the present disclosure, heterogeneous data is analyzed according to samples, a data collection mode and a data processing model are automatically adapted, data is collected and processed, loads of all nodes in a cluster are adjusted to arrive at a load balance, and various heterogeneous data which has inherent relevance with each other is uniformly fused. The present disclosure can effectively solve the problem of low efficiency and fusion degree in big data processing in related arts, can improve the efficiency in data processing and fusion degree of data, and consequently increase usability and practicability of the obtained data and ensure data quality for big data analysis and value exploration.

## Claims

1. A data processing method, comprising:
acquiring samples of data to be collected, and pre-processing the samples of the data to be collected to obtain a data collection mode, a data processing model and a collection task of each node in a cluster;
according to the data collection mode, the data processing model and the collection task of each node in the cluster, controlling each node in the cluster to perform data collection and data processing to obtain processed data; and
uniformly fusing the processed data to obtain uniformly fused data.

2. The data processing method according to claim 1, wherein the acquiring samples of data to be collected, and pre-processing the samples of the data to be collected to obtain a data collection mode, a data processing model and a collection task of each node in a cluster, comprises:
controlling each node in the cluster to read the data to be collected and acquiring the samples of the data to be collected and a load condition of each node in the cluster;
assessing the samples of the data to be collected to obtain a quality assessment report which comprises a data type, data coding, a data redundancy, a data sparseness, and a data transmission speed; and
according to the quality assessment report and load conditions of all nodes in the cluster, adapting the data collection mode and the data processing model, and assigning the collection task for each node in the cluster.

3. The data processing method according to claim 1, wherein according to the data collection mode, the data processing model and the collection task of each node in the cluster, controlling each node in the cluster to perform data collection and data processing to obtain processed data, comprises:
controlling each node in the cluster to perform data collection in the collection mode according to the collection task corresponding to the node; and
controlling each node in the cluster to process collected data according to the data processing model to obtain processed data.

4. The data processing method according to claim 1, wherein uniformly fusing the processed data to obtain uniformly fused data comprises at least one of:
according to a preset data regularization model, performing data regularization on the processed data to obtain the uniformly fused data;
according to a preset data integration model, performing data integration on the processed data to obtain the uniformly fused data; and
according to a preset data modeling model, performing data modeling on the processed data to obtain the uniformly fused data.

5. The data processing method according to any one of claims 1 to 4, wherein after uniformly fusing the processed data to obtain uniformly fused data, the method further comprises:
storing the uniformly fused data by categories.

6. The data processing method according to claim 1, wherein before acquiring samples of data to be collected, and pre-processing the samples of the data to be collected to obtain a data collection mode, a data processing model and a collection task of each node in a cluster, the method further comprises:
configuring a data collection interface;
wherein the acquiring samples of data to be collected, and pre-processing the samples of the data to be collected, comprises:
acquiring the samples of the data to be collected by the data collection interface and pre-processing the samples of the data to be collected;
wherein the controlling each node in the cluster to perform data collection and data processing, comprises:
controlling each node in the cluster to perform data collection by the data collection interface, and controlling each node in the cluster to perform data process on the collected data.

7. The data processing method according to claim 6, wherein the configuring the data collection interface comprises:
acquiring a configuration parameter of the data collection interface;
performing a connection test on the data collection interface according to the configuration parameter;
if the connection test is successful, distributing a configuration file of the data collection interface which comprises the configuration parameter to other nodes in the cluster, configuring each node in the cluster, and controlling each node in the cluster to connect to the data collection interface; and
if the connection test is not successful, performing the step of acquiring a configuration parameter of the data collection interface.

8. A data processing device, comprising:
an adaption module configured to acquire samples of data to be collected, and pre-process the samples of the data to be collected to obtain a data collection mode, a data processing model and a collection task of each node in a cluster;
a data processing module configured to, according to the data collection mode, the data processing model and the collection task of each node in the cluster, control each node in the cluster to perform data collection and data processing to obtain processed data; and
a uniform fusion module configured to uniformly fuse the processed data to obtain uniformly fused data.

9. The data processing device according to claim 8, wherein the adaption module comprises:
a sample collection unit configured to control each node in the cluster to read the data to be collected and acquire the samples of the data to be collected and a load condition of each node in the cluster;
a data assessment unit configured to assess the samples of the data to be collected to obtain a quality assessment report which comprises a data type, data coding, a data redundancy, a data sparseness, and a data transmission speed; and
an adaption unit configured to, according to the quality assessment report and load conditions of all nodes in the cluster, adapt the data collection mode and the data processing model, and assigning the collection task for each node in the cluster.

10. The data processing device according to claim 8, wherein the data processing module comprises:
a data collection unit configured to control each node in the cluster to perform data collection in the collection mode according to the collection task corresponding to the node; and
a data processing unit configured to control each node in the cluster to process collected data according to the data processing model to obtain processed data.

11. The data processing device according to claim 8, wherein the uniform fusion module comprises a data acquisition unit and one or more of a data regularization unit, a data integration unit and a data modeling unit;
wherein:
the data regularization unit is configured to, according to a preset data regularization model, perform data regularization on the processed data;
the data integration unit is configured to, according to a preset data integration model, perform data integration on the processed data;
the data modeling unit is configured to, according to a preset data modeling model, perform data modeling on the processed data; and
the data acquisition unit is configured to acquire the uniformly fused data.

12. The data processing device according to claim 8, 9, 10 or 11, wherein the data processing device further comprises a storage module configured to store the uniformly fused data by categories.

13. The data processing device according to claim 8, wherein the data processing device further comprises an interface configuration module configured to configure a data collection interface;
wherein the adaption module is configured to acquire the samples of the data to be collected by the data collection interface and pre-process the samples of the data to be collected;
wherein the data processing module is configured to control each node in the cluster to perform data collection by the data collection interface, and control each node in the cluster to perform data process on the collected data.

14. The data processing device according to claim 13, wherein the interface configuration module comprises:
a parameter acquisition unit configured to acquire a configuration parameter of the data collection interface;
a connection test unit configured to perform a connection test on the data collection interface according to the configuration parameter; and
a file distribution unit configured to, if the connection test is successful, distribute a configuration file of the data collection interface which comprises the configuration parameter to other nodes in the cluster, configure each node in the cluster, and control each node in the cluster to connect to the data collection interface;
wherein the parameter acquisition unit is further configured to, if the connection test is not successful, acquire a configuration parameter of the data collection interface.

15. A data processing system, comprising an adaption processor, a data processor, and a data uniform fusion processor; wherein:
the adaption processor is configured to acquire samples of data to be collected, and pre-process the samples of the data to be collected to obtain a data collection mode, a data processing model and a collection task of each node in a cluster;
the data processor is configured to, according to the data collection mode, the data processing model and the collection task of each node in the cluster, control each node in the cluster to perform data collection and data processing to obtain processed data; and
the data uniform fusion processor is configured to uniformly fuse the processed data to obtain uniformly fused data.

16. The data processing system according to claim 15, further comprising:
a data collection interface adaptor configured to configure a data collection interface;
a data storage configured to store the uniformly fused data by categories; and
a system manager which comprises:
a data managing module configured to manage a configuration file of the data collection interface, a connection test result of the data collection interface, samples of data to be collected, a quality assessment report and load conditions of all nodes in the cluster;
a resource managing module configured to manage samples of data to be collected, data collection, data processing, uniform fusion and storage of data, and resource consumption condition of the cluster, and control load balancing of all nodes in the cluster;
a model managing module configured to manage a data collection interface configuration template, a data assessment template, a data collection template, a data processing model, a data regularization model, a data integration model and a data modeling model; and
a procedure monitoring module configured to monitor procedures of configuration of the data collection interface, reading of samples of data to be collected, data assessment, data processing, uniform fusion and storage of data, and record and process completion status, a middle error and an abnormal during the procedures of the configuration of the data collection interface, reading of samples of data to be collected, data assessment, data processing, uniform fusion and storage of data.
